# EUROPEAN PATENT APPLICATION

(11) **EP 1 927 515 A1**
(43) Date of publication of application: **04.06.2008**
(21) Application number: 07386028.0
(22) Date of filing: 28.11.2007
(51) Int. Cl.: B60R 21/02

(54) **Plane metallic protective guard of pick-up truck rear window, with reinforcing bend ups, made with the use of the methods laser cutting, plasma cutting, waterjet cutting or punching**

(30) Priority: 29.11.2006 GR 20060100651
(71) Applicant: G. & A. Koutroubis & Co E.E., 19300 Aspropirgo's Xirorema (GR)
(72) Inventor: Koutroubis, Georgios, Thrakomakedones Attiki (GR)

(57) **Abstract**

Plane protective guard, for protection of the rear window of pick-up trucks, featuring reinforcing bend - ups and made of Sheet metal (Steel, Aluminum, Stainless Steel, Cooper) 1 up to 8 mm thickness, with the use of one of the following cutting methods: Laser Cutting, Plasma Cutting, Waterjet Cutting, Punching.

The shape of the plane protective guard, forms load-bearing cells which deliver uniformly the possible loads caused by hits, and openings that while they provide the driver sufficient visual field with the back area of the vehicle, they do not allow objects to be entered in the passengers cab.

The plane protective guard, can accept plane elements that contribute to the additional protection of the passengers cab, from objects and the sun.

The abovementioned methods of fabrication, provide the capability of achieving various shapes and patterns on the plane of the guard, thus providing unlimited possibilities of decoration for the vehicle.

## Description

### Description of the invention

The invention refers to a plane protective guard, made of unified sheet metal, designed for the rear window of a Pick-Up truck.

The use of protective guards for rear windows of Pick-up trucks is common practice. The aforementioned practice prevents the unintentional entry in the passenger cab, of any objects placed onto the load-bed of the vehicle, due to mishandling, and ultimately aims, to assure the safety of the passengers.

The guards used up to now, are made of tubular elements, welded or bolted to each other and adapted either directly onto the load-bed of the vehicle, or on other structural items, shaped into a frame and being able to support the guard.

The existing guards provide inadequate protection to the rear window because they leave large openings, through which, it would possible for some objects to enter the passenger cab.

Furthermore, due to the fact that existing guards consist of detached cylindrical elements, they are of reduced strength in the case that a heavy object impact onto the guard, result into the rupture of the rear window with all the possible subsequences.

Additionally, the existing guard designs, due to the cylindrical shape of their elements, are not suitable for mounting on them of plane illuminating items, which conform to Highway Code requirements. This cylindrical shape of the aforementioned elements, does not facilitate, and in some cases does not permit, the placement on the guards, of other plane elements, such as sun visors for the protection of the passenger cab, hard to brake or unbreakable window glasses for additional protection of the passengers cab etc.

Finally, the lack flexibility of the fabrication methods used for the existing guards (usually they are elements of tubular section, straight or curved - after bending- which are welded or bolted together), results to a very limited variety of shapes that the guard can take and as a result it is not possible to achieve any significant decorating of the vehicle when using these.

The new guard that is proposed is made of plane sheet metal of metal alloy of 1 mm up to 8 mm in thickness.

As opposed to existing guards design and methodology of manufacture, the new fabrication method might be one of the following: Laser Beam Cutting Method,

Plasma Cutting Method, Waterjet Cutting Method, Punching Cutting Method.

With the use of the abovementioned methods, which are already well known in Industry, plane guards can be made that could have any plane shape that might be demanded according to the outside line of the vehicle, to the features of the rear window or to the aesthetic of the vehicle's owner or the guard's designer.

The imagination and creativity of the designer of the plane guard, is the only limitation to the inexhaustible number of shapes that the guard can have.

As opposed to the existing guard designs, at the inner area of the guard, blanks have been provided, having such shape and size, that while they do not allow objects placed on the bed of the vehicle to be entered in the passengers cab, additionally, they provide the driver sufficient visual field with the back area of the vehicle, through the mirror in the passenger's cab.

The blanks are separated from each other with Load Bearing Elements (LBEs) of various shapes, that, according to each case, can follow the external lines of possible elements of the window (i.e. in case that the window has vertical columns, surrounding rubbers etc). The interconnection between the LBE forms a framing net, that has the ability to share the loads that might strain the guard. As a result, in case of impact of a load on one unique LBE of the framing net, the load will be delivered and shared to all the surface of the guard, eliminating the danger of failure.

Furthermore, wherever necessary, the guard, has bend ups for strengthening, in particular directions.

As opposed to the predecessors, the plane shape of the guard, allows and assists the placement of plane elements, such as plane illuminating elements of the Highway Code , plane sun visors, unbreakable window glasses for additional protection of the passengers cab etc.

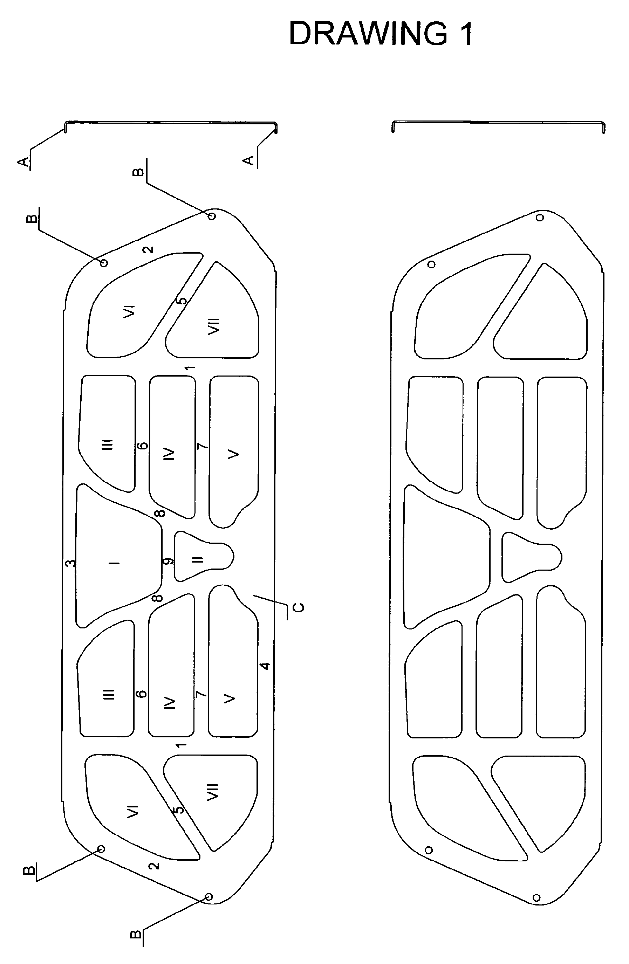

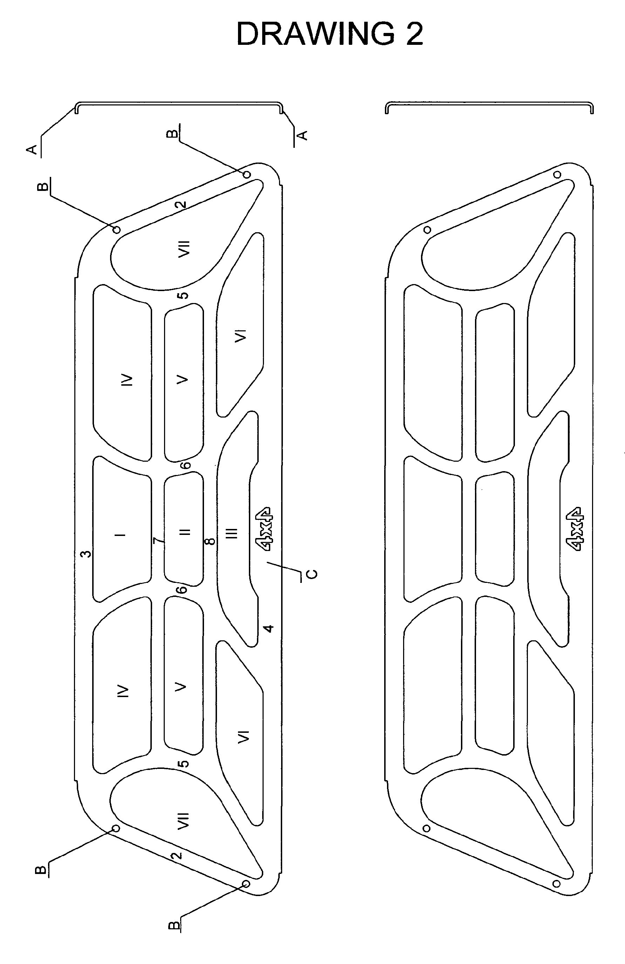

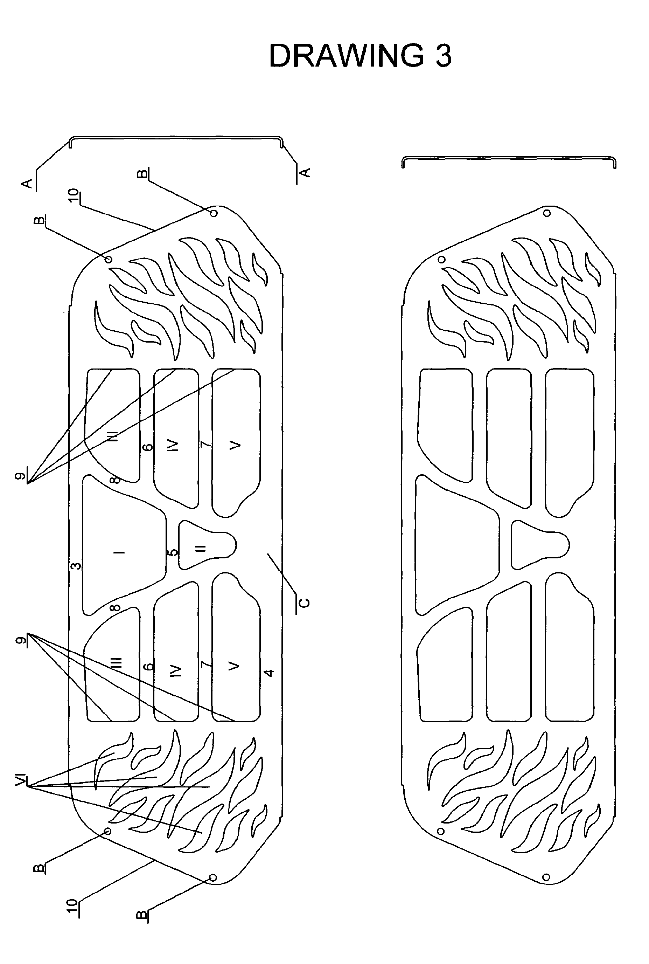

The drawings 1, 2, and 3 present 3 variations of the plane guard, that can be placed in different pick - up trucks.

More analytically

### Drawing 1:

The material used is stainless steel, 3 mm thk.

The fabrication method used is PLASMA cutting method.
LBE (1) (columns) follow the line of the columns of the rear window.
LBEs (2),(3),(4) follow the line of the borders of the rear window and appoint the boundaries of the surrounding of the rear window.
LBEs (5),(6),(7),(8),(9) are reinforcing, for the delivery - sharing of the stresses in case of load application, while all together form the necessary openings for the provision of the visual field of the driver to the back of the vehicle, through the mirror of the passenger's cab.

The bend ups (A), reinforce the whole guard.

The holes (B), are used for the placing of the guard on the Roll Bar that is placed on the load bed of the vehicle.

In area (C) it is possible to have any logo required.

The openings (I), (II), (III), (IV), (V), (VI), (VII), allow the provision of the visual field of the driver to the back of the vehicle, through the mirror of the passenger's cab.

On all LBEs of the guard (1), (2), (3), 4), (5), (6), (7), (8), (9), it is possible to place plane illuminating elements of the Highway Code, (markers, position lamps, flasher lamps etc).

Identically, on the aforementioned it is possible to place plane sun visors, hard to brake window glasses (they might be made of plexiglass) for additional protection of the passengers cab etc. The aforementioned glasses might have various color combinations, i.e. different for each opening, in order to improve the aesthetic of the vehicle.

### Drawing 2:

The material used is aluminum alloy, 5 mm thk.

The fabrication method used is WATERJET cutting method.

LBEs (2),(3),(4) follow the line of the borders of the rear window and appoint the boundaries of the surrounding of the rear window.

LBEs (5),(6),(7),(8),(9) are reinforcing for the delivery - sharing of the stresses in case of load application, while all together form the necessary openings for the provision of the visual field of the driver to the back of the vehicle, through the mirror of the passenger's cab.

The bend ups (A), reinforce the whole guard.

The holes (B), are used for the placing of the guard on the Roll Bar that is placed on the bed of the vehicle.

In area (C), as well as on other positions of the guard, it is possible to have any logo required.

The openings (I), (II), (III), (IV), (V), (VI), (VII), allow the provision of the visual field of the driver to the back of the vehicle, through the mirror of the passenger's cab.

On all LBEs of the guard (1), (2), (3), 4), (5), (6), (7), (8), (9), it is possible to place plane illuminating elements of the Highway Code, (markers, position lamps, flasher lamps etc).

Identically, on the aforementioned it is possible to place plane sun visors, hard to brake window glasses (they might be made of plexiglass) for additional protection of the passengers cab etc. The aforementioned glasses might have various color combinations, i.e. different for each opening, in order to improve the aesthetic of the vehicle.

### Drawing 3:

The material used is steel, 4 mm thick.

The fabrication method used is LASER cutting method.

The lines (9) follow the lines of the columns of the rear window.

The lines (10) follow the lines of the line of the borders of the rear window and appoint the boundaries of the surrounding of the rear window columns of the rear window.

LBEs (3,4) follow the line of the borders of the rear window and appoint the boundaries of the surrounding of the rear window.

LBEs (5),(6),(7),(8) are reinforcing for the delivery - sharing of the stresses in case of load application, while all together form the necessary openings for the provision of the visual field of the driver to the back of the vehicle, through the mirror of the passenger's cab.

The bend ups (A), reinforce the whole guard.

The holes (B), are used for the placing of the guard on the Roll Bar that is placed on the load bed of the vehicle.

In area (C), as well as on other positions of the guard, it is possible to have any logo required.

The openings (I), (II), (III), (IV), (V), (VI), allow the provision of the visual field of the driver to the back of the vehicle, through the mirror of the passenger's cab.

On all LBEs of the guard it is possible to place plane illuminating elements of the Highway Code, (markers, position lamps, flasher lamps etc).

Identically, on the aforementioned it is possible to place plane sun visors, unbreakable window glasses (they might be made of plexiglass) for additional protection of the passengers cab etc. The aforementioned glasses might have various color combinations, i.e. different for each opening, in order to improve the aesthetic of the vehicle.

## Claims

1. Product, made of a unified sheet metal (Steel, Aluminum, Stainless Steel, Cooper), with one of the following blanking - piercing - cutting methods: LASER CUTTING, PLASMA CUTTING, WATERJET CUTTING, PUNCHING, and which has as purpose to be used as a plane protective guard for rear windows of pick up trucks.

2. Use of the aforementioned product, as plane protective guard, having reinforcing bend-ups, for the protection of the rear window of pick-up trucks.

3. Product, according to claim 1, having as additional feature, the placement on it of plane illuminating elements of Highway Code (markers, position lamps, flasher lamps etc).

4. Product, according to claim 1, having as additional feature, the placement on it of plane sun visors for the protection of the passengers cab.

5. Product, according to claim 1, having as additional feature, the placement on it of hard to break or unbreakable window glasses, for additional protection of the passengers cab.
